# EUROPEAN PATENT APPLICATION

(11) **EP 4 195 346 A1**
(43) Date of publication of application: **14.06.2023**
(21) Application number: 21306722.6
(22) Date of filing: 07.12.2021
(51) Int. Cl.: H01M 10/0525, H01M 10/0565

(54) **POLYSILOXANE BASED CROSSLINKED SOLID ELECTROLYTE COMPOSITIONS AND THE CELLS COMPRISING THE SAME**

(71) Applicant: SAFT, 92300 Lavallois-Perret (FR); TotalEnergies OneTech, 92400 Courbevoie (FR); The Universite de Montreal, Montreal, Quebec H3T 1J4 (CA)
(72) Inventor: PRÉBÉ, Arnaud, TERREBONNE, J6V1K7 (CA); FORAN, Gabrielle, SAINT-LAURENT, H4N2A6 (CA); LEPAGE, David, MONTRÉAL, H4G 1T2 (CA); AYME-PERROT, David, 60190 ARSY (FR); DOLLÉ, Mickaël, MONTRÉAL, H2V 2V5 (CA)
(74) Representative: Lavoix

(57) **Abstract**

The present invention concerns a three-dimensional networked polymer electrolyte composition based on a silylated polymer resulting from the crosslinking of an amine-based polysiloxane and an epoxy compound, and one or more ionic salt(s) such as lithium salts. It also concerns the process of preparation thereof, as well as the electrochemical cells and the batteries containing the same.

## Description

The present invention concerns the field of energy storage, and particularly solid-state batteries.

Lithium-ion batteries offer outstanding energy density and are widely used for portable devices and electric and hybrid vehicles for example.

They are based on the reversible exchange of the lithium ion between the positive and negative electrodes, separated by an ionic conductive liquid electrolyte. Such liquid electrolytes are important as they facilitate the mobility of Li+ cations in the battery cell. Nevertheless, they are based upon flammable organic solvents, which can potentially give rise to thermal runaway if incidents occur. In this context, polymer electrolytes have been developed as ionic conductive solid electrolytes for solid state batteries notably to promote system safety and to potentially increase the stored energy. Nevertheless, most of these batteries suffer from lithium dendrite growth during charge/discharge cycles which may affect their morphological integrity potentially leading to internal short circuits. In other words, such batteries still have a limited lifetime, and are not as safe as they should be.

In the view of optimizing the solid-state batteries, ionic conductive solid electrolytes must therefore provide excellent ionic conductivity (to be able to work in a power range comparable with Li-Ion) as well as good mechanical properties (to promote the integrity of battery cells).

Although Li-ion batteries have been commercialized since the 1990's, these devices remain revolutionary in the energy storage domain. Thanks to continuous increases in performance, the use of this technology has been growing exponentially. Increasing battery capacities have allowed for increases in the autonomy of portable electronic devices to the point where batteries have been integrated into vehicles. Hence the race for improved battery performance has been launched to maximize the energy densities and to achieve the highest possible autonomy.

Moreover, the security of the energy storage system enclosed within the vehicle is of the utmost importance as the energy density is increased. One fundamental aspect of battery safety is to avoid the thermal liberation of electrochemical energy in the case of an accident. This is problematic in the case of classic Li-ion batteries. These devices use a flammable organic electrolyte that can, when overheated, result in the thermal runaway of the battery that can lead to an explosion. Therefore, modern Li-ion battery packs are equipped with complex thermal management systems to avoid such critical scenarios and reduce the overall risk that is associated with these devices.

For this reason, there is an intensive research effort to develop "all solid-state" batteries. The fundamental idea consists of replacing the liquid electrolyte by a solid ionic conductive electrolyte. Such a compound avoids the potential evaporation and combustion of the electrolyte in case of overheating, hence avoiding the thermal runaway scenario. This would allow for a simplified thermal management system (thus significant decreases in mass and volume). In addition, the use of a solid electrolyte may allow for a different or even wider electrochemical stability window compared to classical solvents (essentially linear and cyclic carbonates). One can envision having a solid electrolyte that is not only less reactive but that also has a higher mechanical stability versus lithium metal, as is the case for polyethylene oxide (PEO) which thus limits/slows down the growth of dendrites compared to liquid electrolytes. The use of lithium metal, which is the most reducing element, as a negative electrode, could allow for an increase in the electrochemical cell potential and therefore the energy density.

Several technical approaches to build solid electrolytes have been tried and many more are currently under investigation.

PEO is today's most efficient solid polymer electrolyte but has the disadvantage of requiring a high temperature (>60°C) to operate efficiently. The ether functional group on PEO assists in the dissociation of the lithium salt (typically LiTFSI). Increased polymer chain mobility at high temperature (70-80°C) then allows for increased Li⁺ cation mobility within the polymer matrix. PEO has a maximum conductivity of up to 10⁻³S/Cm at 80°C. Several polymers have been tested in an attempt to achieve better ambient temperature conductivities than PEO.

With this goal in mind, several studies have been devoted to the development of polymer electrolytes based on epoxy amine chemistry approach.

EP 3 654416 discloses an electrolyte comprising a gel polymer formed through crosslinking polymerization of an amine-based compound and an epoxy compound, in a solvent. Although EP3654416 claims the use of an epoxy amine three-dimensional network regardless of the nature of the amine and epoxy compound, it also states that an electrolytic solvent is needed for the invention to be functional. A solution for a polyelectrolyte to work without the addition of a solvent would be of great interest due to safety issues linked to the presence of a solvent, as discussed above.

Silicone-based polymers have also been investigated:

WO2019153168A1 discloses a three-dimensional network polymer electrolyte matrix obtained by polymerization of a reactive monomer having an epoxy group, a glycidyl ether type epoxy resin, a crosslinking agent and a linear polymer. Although some of the constituents create a reactive system that generates the 3D polymer network, the linear polymer is however not covalently linked to this network. As a result, this "free" linear polymer can eventually leak out of the network and impact the creep properties.

US10644351 and US2002136958 disclose polymer electrolytes based on solvents which are to be avoided due to safety issues.

US5138013 discloses a curable polyether-functional composition comprising (a) a liquid electrolyte which is a hydrolytic condensation product of aminosilane containing (i) at least one active amine group, and (ii) at least two hydrolysable polyether groups attached to a silicon atom, and (b) a liquid polyepoxide, wherein said aminosilane is comprised of three hydrolysable polyether groups attached to a silicon atom. However, the formation of the alkoxysilane precursor liberates water which is poisonous to lithium batteries, into the system.

The above inventions do not satisfactorily produce a polysiloxane based solvent-free solid three-dimensional network polymer electrolyte that does not contain any "free" unlinked polymer.

Gel-polymer electrolytes are polymeric systems in which a liquid electrolyte is trapped which tends to produce improved ionic mobility. Even though these materials often have better conductivities than solid polymer electrolytes, they present major drawbacks such as decreased mechanical strength. Moreover, there is a real risk of electrolyte leakage at high temperatures. Basically, the gain in ionic conductivity translates into a decrease in battery safety.

There is therefore a need to provide alternative polymer electrolytes suitable for solid state batteries.

The invention aims to provide an ionic conductive electrolyte while securing the battery storage.

The invention has a further goal of supplying an ionic conductive solid electrolyte for solid state batteries.

The invention further aims to produce an ionic conductive solid electrolyte with significant conductivity at a temperature lower or equal to 60°C.

The invention still further aims to provide a Li⁺ ionic conductive solid electrolyte.

The invention further aims to provide an industrial method for the preparation of an ionic conductive electrolyte, in particular the creation of an industrial process that is easy to perform and simple to set up.

The invention also has the goal of solving the above technical problems via a low-cost method.

It has been surprisingly discovered that it is possible to solve one or more of the above problems by producing a solid polymer electrolyte with a three-dimensional network based on at least an amine functionalized polysiloxane, an epoxy functionalized compound and an ionic salt, where the polysiloxane bears at least 2 primary amines and where the epoxy functionalized compound contains at least two or more epoxy functions.

The present invention thus provides a polymer electrolyte composition consisting of:
A: a silylated polymer resulting from the crosslinking reaction of (A1) an amine-based polysiloxane comprising at least two primary and/or secondary amines, with (A2) an epoxy compound comprising at least two epoxy functions ; and
B : one or more ionic salt(s).

As used herein, a polysiloxane refers to a polymer chain comprising the alternate repetition of oxygen and optionally substituted silicium atoms, such as -O-SiRR'- where R and R' are identical or different may represent H or various substituents such as C1-C6 alkyl groups.

In an embodiment, said polysiloxane can be linear, ramified or in a ring-shaped structure.

In a further embodiment it can also contain other functional groups in addition to the amine such as, but not limited to, fluorinated groups, ether groups, acid groups, nitrile groups, imidazole groups, provided the other functional group does not impede the reactivity towards epoxy.

An amine-based polysiloxane refers to a polysiloxane as defined above, where the silicium atoms are substituted by one or more amines throughout the polymer, it being understood that the amines can be primary or secondary amines.

In an embodiment, the primary or secondary amine functions are pendant to the main siloxane chain, where they can be directly linked to the Si atom or through any number of atoms in the polysiloxane compound.

An amine-based polysiloxane comprising at least two primary and/or secondary amines groups thus refers to an amine-based polysiloxane as defined above, provided it comprises more than one amine group throughout the polymer.

Primary amines refer to monosubstituted amines.

Secondary amines refer to disubstituted amines.

Representative examples of polymers (A1) include aminopropylmethylsiloxane dimethylsiloxane copolymer (APDMS), amino-siloxane polyethylene glycol copolymer, poly[dimethylsiloxane-co-(3-aminopropyl)methylsiloxane], poly[dimethylsiloxane-co-[3-(2-(2-hydroxyethoxy)ethoxy)propyl]methylsiloxane-co-(3-aminopropyl)methylsiloxane]], tridecafluoro-1,1,2,2,-tetrahydrooctyl)-triethoxy silane (FAPDMS) and the combinations thereof.

According to an embodiment, (A1) is (aminopropylmethylsiloxane)dimethylsiloxane copolymer.

Typically, polymer (A1) has a molar mass ranging from 500 to 1 000 000 g/mol, preferably between 1 000 and 100 000 g/mol, even more preferably from 1 000 to 50 000 g/mol.

As used herein, an epoxy function refers to a 3-membered cyclic ether group of formula:

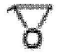

Accordingly, an epoxy compound comprising at least two epoxy functions refers to a compound comprising at least two of such cyclic ethers throughout its structure.

In another embodiment the epoxy compound can bear additional functional groups distinct from the epoxy one, such as, but not limited to, fluorinated groups, ether groups, acid groups, nitrile groups, imidazole groups, provided said additional functional group does not affect the reactivity towards amine.

In another embodiment, different epoxy compounds can be used together.

Representative examples of polymer (A2) include poly(ethylene glycol) diglycidyl ether, poly(propylene glycol) diglycidyl ether, trimethylolpropane triglycidyl ether, and the combinations thereof.

Typically, polymer (A2) has a molar mass between 114 or 100 000 g/mol, preferably between 200 and 50 000 g/mol, even more preferably between 400 and 10 000 g/mol.

According to an embodiment, (A2) is poly(ethylene glycol) diglycidyl ether of formula: 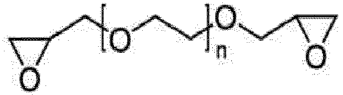 where n is comprised between 1 and 2400 approximately.

It is understood that the epoxy and amine functions are reactive and interact to generate a cured component according to one or more of the following reactions:

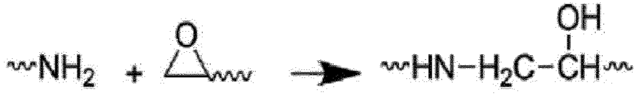

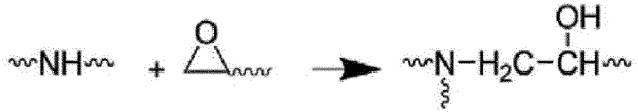

Accordingly, polymers (A1) and (A2) are thus able to generate a silylated polymer in a three dimensional network.

Typically, said polymer A is a cured polysiloxane comprising -NR-CH₂-CH(OH)-groups where R is H or a -CH₂-CH(OH)- group.

According to an embodiment, the epoxy/amine ratio is comprised between 0.1 and 10.

Said ratio defines the number of epoxy functions in polymer (A2) relative to the number of amine groups in polymer (A1).

In an embodiment, said ratio is greater than 1. Preferably, it may be comprised between 0.2 and 5, even more preferably between 0.3 and 3.

As used herein "ionic salts" refer to salt species able to provide ions used in battery technology. The salts may be chosen from a variety of alkali metals- or alkaline earth metals-ion conducting electrolyte salts typically used for batteries, such as lithium. Various types of lithium salts used to conduct Li+ ions in electrolyte solutions for lithium rechargeable batteries are disclosed in particular Xu et al. Formulation of Blended-Lithium-Salt Electrolytes for Lithium Batteries Angew. Chem. Int. Ed. 2020, 59, 3400, and Auger et al Materials Science and Engineering: R: Reports 2018, 134, 1-21.

Lithium hexafluorophosphate (LiPF₆) is the dominant Li-salt used in commercial rechargeable lithium-ion batteries. Further illustrative Li-salts include Lithium bis(trifluoromethanesulfonyl)imide (LiTFSI), LiBETI, LiC₂F₅SO₃, LiC₄F₉SO₃, LiCF₃SO₃, Nal, NaSCN, NaBr, Kl, KBr, LiClO₄, LiBF₄, LiAsF₆, LiPF₆, LiNO₃, Li(CF₃SO₂)₂N, Li(CF₃SO₂)₃C, LiN(SO₂C₂F₅)₂, lithium alkyl fluorophosphates, lithium difluoro(oxalato)borate, lithium bis(oxalato) borate (LiBOB), MTFSiLi, STFSiLi or any mixtures of them.

Particularly preferred lithium salts are LiTFSI, LiBOB and LiPF₆.

According to an embodiment, the polymer electrolyte composition comprises ionic salt(s) in an amount comprised between 5 and 95% (in weight) of the total polymer electrolyte composition, preferably between 10 and 50%, and more preferably between 15 and 40%.

According to a further object, the present invention also concerns the process of preparation of a polymer electrolyte composition of the invention, said process comprising the steps of :
- Mixing (A1), (A2) and (B) as defined in any one of the preceding claims at a temperature T1, where (A1) and (A2) are in the liquid form at T1 ; and
- Optionally adjusting the temperature to control the crosslinking reaction between (A1) and (A2).

In one embodiment, the salt is dissolved in either (A1) or in (A2) or in the mixture of both.

According to an embodiment, the mixing of (A1), (A2) and (B) comprises first mixing (B) with (A2) until the salt(s) is/are dissolved, followed by the addition of (A1).

According to an alternative embodiment, (A1) and (A2) are mixed together in the liquid form for the epoxy amine reaction to occur properly. Thus, (A1) and (A2) must be chosen such that both may be in the liquid state in the same temperature range.

The mixing step is typically carried out at temperature T1, where the polymers are in the liquid form. T1 may be equal or higher than the ambient temperature, depending on the nature of polymers (A1) and (A2).

If necessary, the mixture is heated to temperature T1 to allow the melting of the polymers to ensure proper mixing.

Depending on temperature T1, the curing can occur spontaneously or may need further heating to be triggered, or may be cooled to slow down or inhibit the cross linking reaction.

According to an embodiment, the process may thus comprise the step of adjusting the temperature to control the crosslinking reaction between (A1) and (A2).

Typically, said step may include increasing the temperature of the reactional mixture to a temperature T2, where T1<T2. Typically, T2 may be comprised between ambient temperature and 150°C.

Alternatively, or consecutively, said step may include decreasing the temperature of the reactional mixture to a temperature T2, where T1>T2. Typically, T2 may be comprised between 0°C and ambient temperature.

In a preferred embodiment, the temperatures T1 and/or T2 may be adjusted to allow efficient mixing and proper gel crosslinking.

The gel crosslinking step typically involves the combination of epoxy-amine and epoxy-epoxy reactions to obtain a solid three-dimensional network polymer electrolyte.

The process is particularly advantageous in that it starts from liquid precursors and leads to a crosslinked system which ensures better mechanical resistance, allowing its use in gel electrolyte systems.

If desired, the obtained gel polymer electrolyte can be further processed, such as shaped in the desired form.

In an embodiment, the processing techniques that are used to carry out this invention can be related to various epoxy-amine composite manufacturing techniques such as Vacuum Assisted Resin Transfer Molding (VARTM). Such techniques can be used to allow the polymer electrolyte to penetrate an electrode porosity before significant polymerization of the composition has taken place.

According to a further objective, the present invention also concerns an electrochemical cell comprising a polymer electrolyte according to the invention.

As used herein, an electrochemical cell refers to an elementary cell including a positive electrode/electrolyte/negative electrode assembly configured to store the electrical energy that is produced by a chemical reaction and to release it as an electric current.

According to an embodiment, the cell is a solid-state cell.

Typically, the cell of the invention is a Li-ion cell.

According to a further object, the present invention also concerns an electrochemical module comprising the stack of at least two cells according to the invention, each cell being electrically connected with one or more other cell(s).

The term "module" therefore designates the assembly of several electrochemical cells, said assembly being able to be in series and / or parallel.

According to another object, the invention also relates to a battery or "accumulator" comprising one or more modules according to the invention. The term "battery" thus means the assembly of one or more modules according to the invention.

### Figures

Figure 1 illustrates the ionic conductivity of the materials of the examples compared with the ionic conductivity of counter example 2 at different temperatures.
Figure 2 compares the complex viscosity for the compositions of Example 1 and counter example 1 (methyl terminated PDMS of 17000g/mol).
Figure 3 compares the storage moduli for the compositions of Example 1 and counter example 1 (methyl terminated PDMS of 17000g/mol).

The following examples are given as a non-limiting illustration of an embodiment of the present invention.

### Examples

The percentages are expressed in weight relative to the total weight of the composition except when indicated otherwise.

The electrochemical characterizations were carried out using electrochemical impedance spectroscopy (SP300, BioLogic) with an oven controlling the temperature (Sartorius).

### Sample Preparation

### Example 1

Lithium bis(trifluoromethanesulfonyl)imide (LiTFSI) is added to poly(ethylene glycol) diglycidyl ether (E1) that has a molecular weight of 500 g/mol. The mass of the LiTFSI is 40 % of the mass of E1. The mixture is stirred at room temperature until the salt has dissolved. (20-25 mol% aminopropylmethylsiloxane)-dimethylsiloxane copolymer (APDMS-20), having one third of the mass of E1, is added to the mixture which is then stirred by hand at room temperature until a homogeneous mixture is produced. The resultant mixture is heated at 90 °C for 24 hours and is then vacuum dried at 60 °C for 24 hours. This yields a crosslinked polymer with an epoxide to amine molar ratio of 2.5.

### Example 2

E1 with a molecular weight of 1000 g/mol is heated to 70 °C until melted. LiTFSI is added and the mixture is heated to 70 °C with stirring. The mass of the LiTFSI is 40 % of the mass of E1. The mixture is stirred until the salt has dissolved. The mixture is cooled to room temperature then APDMS-20, having one third of the mass of E1, is added to the mixture which is stirred at 70 °C until a homogeneous mixture is produced. The resultant mixture is heated at 90 °C for 24 hours and is then vacuum dried at 60 °C for 24 hours. This yields a crosslinked polymer with an epoxide to amine molar ratio of 1.2.

### Example 3

E1 with a molecular weight of 2000 g/mol is heated to 70 °C until melted. LiTFSI is added and the mixture is heated to 70 °C with stirring. The mass of the LiTFSI is 40 % of the mass of E1. The mixture is stirred until the salt has dissolved. The mixture is cooled to room temperature then APDMS-20, having one third of the mass of E1, is added to the mixture which is stirred at 70 °C until a homogeneous mixture is produced. The resultant mixture is heated at 90 °C for 24 hours and is then vacuum dried at 60 °C for 24 hours. This yields a crosslinked polymer with an epoxide to amine molar ratio of 0.6.

### Example 4

E1 with a molecular weight of 2000 g/mol is heated to 70 °C until melted. LiTFSI is added and the mixture is heated to 70 °C with stirring. The mass of the LiTFSI is 12 % of the mass of E1. The mixture is stirred until the salt has dissolved. The mixture is cooled to room temperature then APDMS-20, having one tenth of the mass of E1, is added to the mixture which is stirred at 70 °C until a homogeneous mixture is produced. The resultant mixture is heated at 90 °C for 24 hours and is then vacuum dried at 60 °C for 24 hours. This yields a crosslinked polymer with an epoxide to amine molar ratio of 1.

### Example 5

LiTFSI is added to E1 with a molecular weight of 500 g/mol. The mass of the LiTFSI is 40 % of the mass of E1. The mixture is stirred at room temperature until the salt has dissolved. (75-80 % tridecafluoro-1,1,2,2,-tetrahydrooctyl)-triethoxy silane) oligomeric cohydrate aqueous solution (FAPDMS-20), having 2.4 times the mass of E1, is added to the mixture which is then stirred by hand at room temperature until a homogeneous mixture is produced. The resultant mixture is heated at 90 °C for 24 hours and is then vacuum dried at 60 °C for 24 hours. This yields a crosslinked polymer with an epoxide to amine molar ratio of 4.5.

### Example 6

LiTFSI and lithium bis(oxalato)borate (LiBOB) are added to E1 that has a molecular weight of 500 g/mol. The combined mass of the lithium salts is 40 % of the mass of E1 with LiTFSI comprising 85 % of the total salt mass and LiBOB comprising 15 % of the total salt mass. The mixture is stirred at room temperature until the salts have dissolved. APDMS-20, having one third of the mass of E1, is added to the mixture which is then stirred by hand at room temperature until a homogeneous mixture is produced. The resultant mixture is heated at 90 °C for 24 hours and is then vacuum dried at 60 °C for 24 hours. This yields a crosslinked polymer with an epoxide to amine molar ratio of 2.5.

### Counter example 1

In this counter example, a linear polymer (Methyl-terminated poly(dimethyl siloxane), (PDMS) is added (cf WO 2019/153168).

LiTFSI is added to E1 that has a molecular weight of 500 g/mol. The mass of the LiTFSI is 40 % of the mass of E1. The mixture is stirred at room temperature until the salt has dissolved. Methyl-terminated poly(dimethyl siloxane) (PDMS) with a molecular weight of 17000 g/mol, having 250 % of the mass of LiTFSI, is added to the mixture which undergoes further stirring to incorporate the PDMS. APDMS-20, having one third of the mass of E1, is added to the mixture which is then stirred by hand at room temperature until a homogeneous mixture is produced. The resultant mixture is heated at 90 °C for 24 hours and is then vacuum dried at 60 °C for 24 hours. This yields a crosslinked polymer with an epoxide to amine molar ratio of 2.5.

### Counter example 2: PEO

In this counter example, no amine-based polysiloxane was used.

PEO with a molar mass of 5000000 g/mol and LiTFSI were dissolved in N-methylpyrrolidone with stirring at room temperature. The mass of LiTFSI is 24.5 % of the mass of the PEO. The resultant mixture was casted and then heated at 120 °C under vacuum to evaporate the solvent. The dried sample was calendered to a thickness of 200 µm.

Sample Composition

| Example | Mass % Epoxide | Mass % Amine | Mass % Salt | Mass % unfunctionalized PDMS |
|---|---|---|---|---|
| 1 | 57 | 20 | 23 | 0 |
| 2 | 57 | 20 | 23 | 0 |
| 3 | 57 | 20 | 23 | 0 |
| 4 | 70 | 7 | 23 | 0 |
| 5 | 26 | 63 | 11 | 0 |
| 6 | 57 | 20 | 23 | 0 |
| CE1 | 37 | 12 | 14 | 37 |

### Experimental Results

### Electrochemistry

### Ionic Conductivity

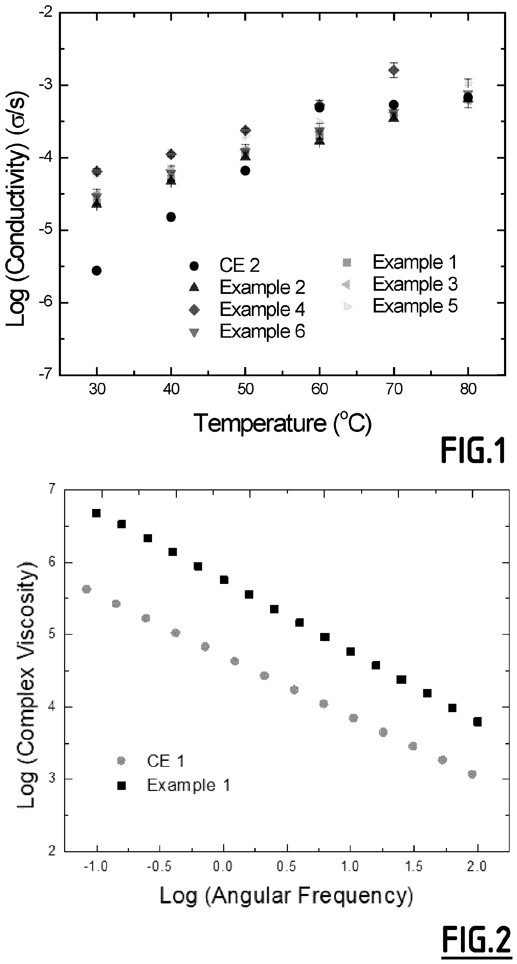

Electrolytes were placed in coin cells and ionic conductivities were measured at temperatures between 80 and 30 °C in descending order using an SPS 300 potentiostat (Biologic). Frequencies between 7 MHz and 100 mHz were used. The ionic conductivity of Example 5 was measured using a Biologic ITS temperature-controlled cell that was controlled using an MTZ-35. The instrument had a frequency range of 5x10⁻² Hz to 3.5x10⁷ Hz. Conductivities of the materials described in the above examples are presented and compared with the ionic conductivity of counter example 2 (Figure 1).

### Transport Numbers

Lithium and Fluorine transport numbers were measured via solid-state NMR using a Bruker wide-bore 9.4 T spectrometer equipped with a 4 mm MAS probe. The prepared electrolyte samples were packed into 4 mm rotor and were spun at 5 kHz at a calibrated temperature of 80 °C. ⁷Li NMR was performed using a 5.6 µs π/2 pulse at a power level of -22.3 dB. For the diffusion experiment, the gradient pulse length was 5 ms, the gradient strength was 50 G/s and the diffusion time was 600 ms. ¹⁹F spectra were collected with using a 4.55 µs - 15.9 dB pulse. For the diffusion experiment, the gradient pulse was 5 ms, the gradient strength was 52.6 G/cm and the diffusion time was 2500 ms. Diffusion coefficients for lithium cations and fluorine anions along with lithium transport numbers are presented in the table below. These are compared to counter example 2.

| Example | Li⁺ Diffusion Coefficient (m²/s) | F⁻ Diffusion Coefficient (m²/s) | Li⁺ Transport Number |
|---|---|---|---|
| 1 | 3.2 ± 0.1 x 10⁻¹² | 3.3 ± 0.1 x 10⁻¹² | 0.49 ± 0.05 |
| 2 | 5.3 ± 0.1 x 10⁻¹³ | 2.0 ± 0.1 x 10⁻¹³ | 0.73 ± 0.05 |
| 3 | 2.6 ± 0.1 x 10⁻¹⁴ | 5.4 ± 0.1 x 10⁻¹⁵ | 0.83 ± 0.1 |
| 4 | 7.0 ± 0.4 x 10⁻¹² | 1.9 ± 0.3 x 10⁻¹³ | 0.97 ± 0.09 |
| 5 | 2.7± 0.1 x 10⁻¹² | 2.0 ± 0.2 x 10⁻¹³ | 0.93 ± 0.08 |
| CE2 | 1.8 ± 0.3 x 10⁻¹³ | 1.6 ± 0.1 x 10⁻¹² | 0.10 ± 0.08 |
| 6 | N/A | N/A | N/A |

### Mechanical Properties

### Complex Viscosity and Storage Modulus

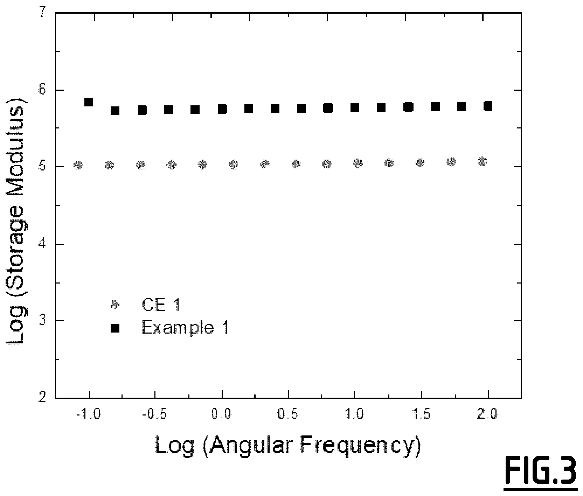

Mechanical strength was measured using a TA Discovery hybrid rheometer with a 20 mm plate. The strain was set to 1.0 % and a logarithmic sweep of angular frequencies ranging from 0.1 rad/s to 100 rad/s was used. These measurements were performed at a temperature of 80 °C which was calibrated for four minutes prior to taking measurements. The storage modulus and the complex viscosity were measured as a function of angular frequency to compare Example 1 to counter example 1 (methyl terminated PDMS of 17000g/mol). Larger storage moduli are indicative of greater resistance to deformation and more extensive crosslinking. The addition of long chain PDMS was found to decrease both the storage modulus (Figure 3) and the complex viscosity (Figure 2).

In addition to rheological methods, the mechanical strength of Example 1 and counter example 1 and 2 was measured by determining the deformation caused by the application of a 2.7 kg weight at 90 °C. The weight was placed on top of a ^{∼} 1 mm thick circular piece of polymer with a diameter of 20 mm. This system was heated at 90 °C for one day. The thickness of the polymer samples was measured in the center of the circle using a micrometer. Sample thickness was measured both prior to, and following, the above treatment. Changes in sample thickness were used to evaluate the mechanical strength of these samples. Materials that experienced greater deformation were determined to have lower mechanical strength.

| Example | Initial Thickness (mm) | Final Thickness (mm) | Change (mm) | Change (%) |
|---|---|---|---|---|
| 1 | 1.111 | 0.943 | 0.168 | 15 |
| CE1 | 1.955 | 1.163 | 0.792 | 37 |
| CE2 | 1.155 | 0.601 | 0.554 | 48 |

Altogether, the results provide evidence *inter alliae* that the mechanical strength under compression is greater for the examples following the invention compared to previous art confirming better creep resistance properties of formulation not containing linear polymers. Further, the addition of a linear polymer which is not covalently bound to the 3D network (see CE1, such as in WO 2019/153168) affects the properties and integrity of the material.

## Claims

1. A polymer electrolyte composition consisting of :
(A) : A silylated polymer resulting from the crosslinking reaction of (A1) an amine-based polysiloxane comprising at least two primary and/or secondary amines, with (A2) an epoxy compound comprising at least two epoxy functions ;
(B) : one or more ionic salt(s).

2. The polymer electrolyte composition according to claim 1 wherein polymer (A) is a cured polysiloxane comprising -NR-CH₂-CH(OH)- groups where R is H or a -CH₂-CH(OH)- group.

3. The polymer electrolyte composition according to anyone of the preceding claims wherein the epoxy/amine ratio is between 0.1 and 10, where said ratio defines the number of epoxy functions in polymer (A2) relative to the number of amine functions in polymer (A1).

4. The polymer electrolyte composition according to anyone of the preceding claims wherein the ionic salt(s) (B) are lithium salts.

5. The polymer electrolyte composition according to anyone of the preceding claims wherein the ionic salt(s) (B) are chosen from Lithium bis(trifluoromethanesulfonyl)imide (LiTFSI), LiBETI, LiC₂F₅SO₃, LiC₄F₉SO₃, LiCF₃SO₃, NaI, NaSCN, NaBr, Kl, KBr, LiClO₄, LiBF₄, LiAsF₆, LiPF₆, LiNO₃, Li(CF₃SO₂)₂N, Li(CF₃SO₂)₃C, LiN(SO2C2F₅)₂, lithium alkyl fluorophosphates, lithium difluoro(oxalato)borate, lithium bis(oxalato) borate (LiBOB), MTFSiLi, STFSiLi or any mixtures of them.

6. The polymer electrolyte composition according to any one of the preceding claims wherein the amount of the ionic salts (B) is comprised between 5 and 95% (in weight) of the total polymer electrolyte composition.

7. The polymer electrolyte composition according to any one of the preceding claims wherein (A1) has a molar mass ranging from 500 to 1 000 000 g/mol and (A2) has a molar mass between 100 or 100 000 g/mol.

8. The polymer electrolyte composition according to any one of the preceding claims wherein (A1) is chosen from aminopropylmethylsiloxane dimethylsiloxane copolymer, amino-siloxane polyethylene glycol copolymer, poly[dimethylsiloxane-co-(3-aminopropyl)methylsiloxane], poly[dimethylsiloxane-co-[3-(2-(2-hydroxyethoxy)ethoxy)propyl]methylsiloxane-co-(3-aminopropyl)methylsiloxane, tridecafluoro-1,1,2,2,-tetrahydrooctyl)-triethoxy silane (FAPDMS) and the combinations thereof.

9. The polymer electrolyte composition according to any one of the preceding claims where (A2) is chosen from poly(ethylene glycol) diglycidyl ether, poly(propylene glycol) diglycidyl ether, trimethylolpropane triglycidyl ether, and the combinations thereof.

10. The polymer electrolyte composition according to any one of the preceding claims wherein (A1) is (aminopropylmethylsiloxane)dimethylsiloxane copolymer and (A2) is poly(ethylene glycol) diglycidyl ether.

11. Process of preparation of a polymer electrolyte composition according to any one of the preceding claims comprising the steps of :
- Mixing (A1), (A2) and (B) as defined in any one of the preceding claims at a temperature T1, where (A1) and (A2) are in the liquid form at T1 ; and
- Optionally adjusting the temperature to control the crosslinking reaction between (A1) and (A2).

12. Process according to claim 11 wherein the mixing of (A1), (A2) and (B) comprises first mixing (B) with (A2) until the salt(s) is/are dissolved, followed by the addition of (A1).

13. An electrochemical cell comprising a polymer electrolyte according to anyone of claims 1 to 10.

14. A module comprising the stack of at least two cells according to claim 13, each cell being electrically connected with one or more other cell(s).

15. A battery comprising one or more modules according to claim 14.

## Amended claims

### Amended claims in accordance with Rule 137(2) EPC.

1. A polymer electrolyte composition consisting of :
(A) : A silylated polymer resulting from the crosslinking reaction of (A1) an amine-based polysiloxane comprising at least two primary and/or secondary amines, with (A2) an epoxy compound comprising at least two epoxy functions ;
(B) : one or more ionic salt(s).

2. The polymer electrolyte composition according to claim 1 wherein polymer (A) is a cured polysiloxane comprising -NR-CH₂-CH(OH)- groups where R is H or a -CH₂-CH(OH)- group.

3. The polymer electrolyte composition according to anyone of the preceding claims wherein the epoxy/amine ratio is between 0.1 and 10, where said ratio defines the number of epoxy functions in polymer (A2) relative to the number of amine functions in polymer (A1).

4. The polymer electrolyte composition according to anyone of the preceding claims wherein the ionic salt(s) (B) are lithium salts.

5. The polymer electrolyte composition according to anyone of the preceding claims wherein the ionic salt(s) (B) are chosen from Lithium bis(trifluoromethanesulfonyl)imide (LiTFSI), LiBETI, LiC₂F₅SO₃, LiC₄F₉SO₃, LiCF₃SO₃, Nal, NaSCN, NaBr, KI, KBr, LiClO₄, LiBF₄, LiAsF₆, LiPF₆, LiNO₃, Li(CF₃SO₂)₂N, Li(CF₃SO₂)₃C, LiN(SO₂C₂F₅)₂, lithium alkyl fluorophosphates, lithium difluoro(oxalato)borate, lithium bis(oxalato) borate (LiBOB), MTFSiLi, STFSiLi or any mixtures of them.

6. The polymer electrolyte composition according to any one of the preceding claims wherein the amount of the ionic salts (B) is comprised between 5 and 95% (in weight) of the total polymer electrolyte composition.

7. The polymer electrolyte composition according to any one of the preceding claims wherein (A1) has a molar mass ranging from 500 to 1 000 000 g/mol and (A2) has a molar mass between 100 and 100 000 g/mol.

8. The polymer electrolyte composition according to any one of the preceding claims wherein (A1) is chosen from aminopropylmethylsiloxane dimethylsiloxane copolymer, amino-siloxane polyethylene glycol copolymer, poly[dimethylsiloxane-co-(3-aminopropyl)methylsiloxane], poly[dimethylsiloxane-co-[3-(2-(2-hydroxyethoxy)ethoxy)propyl]methylsiloxane-co-(3-aminopropyl)methylsiloxane, tridecafluoro-1,1,2,2,-tetrahydrooctyl)-triethoxy silane (FAPDMS) and the combinations thereof.

9. The polymer electrolyte composition according to any one of the preceding claims where (A2) is chosen from polyethylene glycol) diglycidyl ether, polypropylene glycol) diglycidyl ether, trimethylolpropane triglycidyl ether, and the combinations thereof.

10. The polymer electrolyte composition according to any one of the preceding claims wherein (A1) is (aminopropylmethylsiloxane)dimethylsiloxane copolymer and (A2) is polyethylene glycol) diglycidyl ether.

11. Process of preparation of a polymer electrolyte composition according to any one of the preceding claims comprising the steps of :
- Mixing (A1), (A2) and (B) as defined in any one of the preceding claims at a temperature T1, where (A1) and (A2) are in the liquid form at T1 ; and
- Optionally adjusting the temperature to control the crosslinking reaction between (A1) and (A2).

12. Process according to claim 11 wherein the mixing of (A1), (A2) and (B) comprises first mixing (B) with (A2) until the salt(s) is/are dissolved, followed by the addition of (A1).

13. An electrochemical cell comprising a polymer electrolyte according to anyone of claims 1 to 10.

14. A module comprising the stack of at least two cells according to claim 13, each cell being electrically connected with one or more other cell(s).

15. A battery comprising one or more modules according to claim 14.
